Europäisches Patentamt

European Patent Office

Office européen des brevets

(11) Publication number: **0 115 955**
**B1**

(12) **EUROPEAN PATENT SPECIFICATION**

(45) Date of publication of patent specification: **19.10.88**

(51) Int. Cl.⁴: **C 04 B 24/38**

(21) Application number: **84300600.8**

(22) Date of filing: **31.01.84**

(54) Tile mortars.

(30) Priority: **31.01.83 US 462507**
**11.10.83 EP 83306133**

(43) Date of publication of application:
**15.08.84 Bulletin 84/33**

(45) Publication of the grant of the patent:
**19.10.88 Bulletin 88/42**

(84) Designated Contracting States:
**AT BE CH DE FR GB IT LI NL SE**

(56) References cited:
**GB-A-2 144 112**
**US-A-3 824 107**
**US-A-4 462 837**

(73) Proprietor: **HERCULES INCORPORATED**
**Hercules Plaza**
**Wilmington Delaware 19899 (US)**

(72) Inventor: **Desmarais, Armand Joseph**
**3419 Pebble Beach Drive**
**Fairway Falls Delaware 19808 (US)**

(74) Representative: **De Minvielle-Devaux, Ian**
**Benedict Peter et al**
**CARPMAELS & RANSFORD**
**43, Bloomsbury Square**
**London WC1A 2RA (GB)**

Courier Press, Leamington Spa, England.

**Description**

This invention relates to novel compositions useful as mortar for the installation of ceramic wall and floor tiles. More specifically, it relates to such a composition containing a novel water-retention agent.

Conventional ceramic tile cements are mixtures of cement, sand, and thickener, usually, they also contain small amounts of polyacrylamide and polyvinyl alcohol to improve performance. The dry cement mixture is then mixed with water to form a mortar.

The physical characteristics of a cured conventional mortar are determined by the rate of curing, and thus, by the rate of water removal therefrom during the curing operation. Any influence which affects these parameters by increasing the rate of water removal or by diminishing the water concentration in the mortar at the onset of the curing reaction can cause a deterioration of the physical properties of the mortar. Most ceramic wall tiles, on their unglazed surfaces, are highly porous and, when set on such a mortar, absorb water therefrom, leading to the difficulties just mentioned. Likewise, most strata to which these tiles are applied such as wallboard, cinderblock, or masonry, are also porous and lead to the same problems.

To overcome, or at least minimize, the above-mentioned water-loss problems, it has been suggested to add to the mortar compositions a small amount of a water-soluble polymer, such as, methylcellulose (U.S. Pat. No. 2,934,932); hydroxyethyl cellulose (U.S. Pat. No. 3,243,307); or phenyl hydroxyethyl cellulose, benzyl hydroxyethyl cellulose or ethyl hydroxyethyl cellulose (U.S. Pat. No. 4,065,319) as a water retention aid. These polymers prevent escape of the water from the cement by increasing the viscosity of the water phase, thus, maintaining the desired water concentration in the mortar during curing.

In accordance with this invention, it has been found that a dry mortar-forming composition comprising, by weight, from about 24% to about 99% of hydraulic cement, from about 0% to about 75% sand, and from about 0.3% to about 4% of a water-retaining thickener, which dry composition is capable, when mixed with from about 25% to about 40% of its own weight of water, of producing a mortar which can be applied in thin layers for setting tile on walls and ceilings, is improved by using a modified hydroxyethyl cellulose having a hydroxyethyl substitution from about 0.3 to about 4.0 M.S. and a hydroxypropyl substitution greater than 0.35 M.S. as the water-retention aid or thickener. More than 0.35 hydroxypropyl M.S. is required to lower the set time of the mortar to the desired level. Preferably the hydroxypropyl substitution is greater than 0.6 M.S. Most preferably, the hydroxyethyl M.S. will be from about 0.8 to 1.8, and the hydroxypropyl M.S. will be from about 0.8 to about 1.5.

The designation M.S. refers to the average number of moles of hydroxyethyl or hydroxypropyl substituent groups combined per cellulosic anhydroglucose unit.

Typically from about 0.3% to about 4% of the modified hydroxyethyl cellulose or of blends thereof is used.

When compared with the mortars prepared with conventional hydroxyethyl celluloses as the water retention agent, the mortars of this invention are improved in texture, set times, and adjustability times, which are three important parameters used widely in the art to characterize tile mortars. They also show improvement in tack and cohesiveness.

Set time is defined in ASTM C266-65. Basically set time is the time the mortar takes to set or harden at a given thickness. Adjustability time is the time during which the position of the tile on the wall can be changed without the tile coming loose from the mortar.

The modified hydroxyethyl cellulose which can be used as thickener in the mortars of this invention is prepared by reacting ethylene oxide and propylene oxide with cellulose in a strongly alkaline medium. Specific techniques for carrying out the etherification are well known in the art and any known procedure can be employed.

In the alternative, a hydroxyethyl cellulose can be etherified with a propylene oxide in a strongly alkaline medium. In this case, the hydroxyethyl cellulose can be substantially any grade having M.S. from about 0.3 to about 4.0. The preferred materials are those having a viscosity from about 800 to about 5000 centipoise (mPas) in a 1% water solution. Materials of higher and lower viscosity can also be used advantageously, however.

A tile mortar based on Portland cement or other hydraulic cements can be prepared containing only the hydraulic cement and the water retention aid of the present invention. Normally, however, most formulations will include a rather substantial amount of sand.

The amount of hydraulic cement can be as high as 99.4% in the case of a mortar containing only hydraulic cement and the modified hydroxyethyl cellulose to as little as about 24% of the hydraulic cement in the case of mortars containing sand and other components. Sand, if used, should be present in the amount of from one to three volumes of sand per volume of hydraulic cement. For setting porous tiles, a mixture containing equal volumes of hydraulic cement and sand up to one volume of hydraulic cement per 1 1/2 volumes of sand produces a mortar which is entirely satisfactory.

The dry mortar composition may also contain finely divided inorganic or organic fibers, such as, for example, mineral wool, glass fibers, fibrous (low substitution or crosslinked) carboxymetyl cellulose, and the like, in amount of from about 1% to about 2%. The incorporation of the fibers improves the thixotropic properties of the mortar, i.e., the use of fibers prevent sag of the mortar. Using a mortar containing fibers to bond ceramic tile to a vertical wall lessens the tendency of the tile to slip down the wall during setting of the mortar. More commonly, a small amount of polyacrylamide or of an anionic or cationic copolymer of acrylamide, i.e., about 1% based by weight on the thickener, is used to improve sag resistance. Polyvinyl alcohol in small amount, from about 0.05% to about 2%, based on the weight of the hydraulic cement, is frequently included to increase wet adhesion and attain better workability.

Thus, the hydraulic cement dry mixture of this invention consists essentially of from about 24% to about 99.4% hydraulic cement; from about 0.3% to about 4% of the modified hydroxyethylcellulose or of blends thereof; and from about 0% to about 75% sand.

This dry mixture, when added to water, forms a thin-set mortar, i.e., a mortar which can be used in thin layers on the order of 3.18 to 6.35 mm (1/8 to 1/4 inch). The amount of water used is such that the resultant mixture will not be so thin as to slide down a wall or drop off a ceiling when applied. In general, from about 25% to about 50% water, by weight based on the weight of the dry mixture, gives good results.

In the examples which follow, various embodiments of the mortar compositions of this invention are illustrated. In Examples 1 through 11, the formulation shown in Table I is employed except that a hydroxypropyl hydroxyethyl cellulose having the hydroxyethyl M.S. and the hydroxylpropyl M.S. shown in Table II for the particular example in question is used as the thickener.

TABLE I

| Components | Parts by weight |
|---|---|
| White Portland cement | 48.89 |
| Fine sand | 50.3 |
| Polyacrylamide | 0.01 |
| Thickener | 0.6 |
| Polyvinyl alcohol | 0.2 |
| Water | 26.0* |

*By weight of the dry component mixture.

The mortar compositions of this invention are prepared by dry mixing the first five components of Table I to a substantially homogeneous state, adding the dry mix to the water, and manually stirring to obtain a trowelable mix with complete and visually uniform wetting of the dry components. The wet mass is slaked for 30 minutes (except for that portion to be used in the set time test which is slaked for only 10 minutes), then remixed thoroughly before any evaluations are carried out.

A portion of the mortar is troweled onto the vertical surface of a dry cinderblock between guide strips 6.35 mm (1/4 inch) thick. A Type B (floor) ceramic tile is lightly tapped onto the mortar surface immediately after application to the cinderblock with the back ribs of the tiles in vertical alignment. The position of the top edge of the tile is marked. Sag is the downward displacement of the tile measured 2 hours after placement on the mortar surface.

After another hour of slaking the mortar is troweled at room temperature and about 50% relative humidity (R.H.) onto a section of gypsum wallboard and 10 Type A (wall) ceramic tiles are pressed onto the mortar leaving 1.59 mm (1/16 inch) spacing between the tiles and wallboard. At 5-minute intervals at room temperature, a tile is twisted through a 90° angle back to its original position. Adjustability time is the longest time at which a tile remains affixed to the mortar when tested in this manner. The characteristics of the cement are shown in Table II.

Set time is the time mortar applied to a ceramic tile at a given thickness takes to set or harden as measured by a Gilmore needle according to the procedures of ASTM C266-65.

Consistency, tack, and cohesiveness are subjective tests which measure trowelability, how well the mortar sticks to a metal spatula or trowel, and the overall integrity of the mortar composition, respectively.

TABLE II
Properties of tile cements modified with hydroxypropyl hydroxyethyl cellulose

| Example No. | Hydroxyethyl cellulose | | Adjust-ability (min.) | Sag mm (in.) | Set Time (hrs.) (final) | Con-sistency (1) | Tack (1) | Cohe-siveness (1) |
| | HE M.S. | HP M.S. | | | | | | |
|---|---|---|---|---|---|---|---|---|
| Control | 2.48 | — | 25 | <1.59 (1/16) | 11 | F | P | F |
| 1 | 0.8 | 1.4 | 55 | <1.59 (1/16) | 12 | E | G | G |
| 2 | 0.82 | 0.68 | 30 | 3.18 (1/8) | 10.5 | F | G | G |
| 3 | 0.86 | 0.48 | 25 | 3.18 (1/8) | 10 | F | F | G |
| 4 | 0.93 | 1.17 | 60 | <1.59 (1/16) | 12 | E | G | G |
| 5 | 1.31 | 1.08 | 50 | <1.59 (1/16) | 11.5 | G | E | E |
| 6 | 1.4 | 1.4 | 65 | <1.59 (1/16) | 12 | E | E | E |
| 7 | 1.47 | 0.74 | 30 | 3.18 (1/8) | 10 | G | G | G |
| 8 | 1.51 | 1.1 | 50 | <1.59 (1/16) | 12 | E | G | E |
| 9 | 1.6 | 1.2 | 60 | <1.59 (1/16) | 12 | E | E | E |
| 10 | 1.70 | 0.55 | 25 | 3.18 (1/8) | 10 | F | F | F |
| 11 | 1.77 | 0.83 | 40 | 3.18 (1/8) | 11 | G | G | G |

(1) E=excellent;    G=good;    F=fair;    P=poor;    VP=very poor

In Examples 12 through 15 the formulation of Table I is used except that blends of hydroxypropyl-hydroxyethylcelluloses having the hydroxypropyl and the hydroxyethyl M.S. shown in Table III are used. The properties of the compositions of Examples 12 through 15 are also shown in Table III.

TABLE III

Properties of tile cements modified with hydroxypropylhydroxyethylcellulose (HPHEC)

| Example No. | HPHEC #1 | | HPHEC #2 | | by Weight | | Adjust-ability (min.) | Sag mm (in.) | Set time (hrs.) (Final) | Consis-tency (1) | Tack (1) | Cohe-siveness (1) |
| --- | --- | --- | --- | --- | --- | --- | --- | --- | --- | --- | --- | --- |
| | HE M.S. | HP M.S. | HE M.S. | HP M.S. | #1 | #2 | | | | | | |
| 12 | 1.25 | 0.99 | 0.43 | 0.36 | 0.36 | 0.24 | 60 | <1.59 (1/16) | 12 | E | E | E |
| 13 | 0.95 | 0.94 | 0.49 | 0.54 | 0.42 | 0.18 | 60 | <1.59 (1/16) | 12 | E | E | E |
| 14 | 1.25 | 0.99 | 0.56 | 0.60 | 0.30 | 0.30 | 60 | <1.59 (1/16) | 12 | E | E | E |
| 15 | 1.25 | 0.99 | 0.36 | 0.36 | 0.42 | 0.18 | 60 | <1.59 (1/16) | 12 | E | E | E |

(1) E=excellent;    G=good;    F=fair;    P=poor;    VP=very poor

Features, advantages and other specific embodiments of this invention will become readily apparent to those exercising ordinary skill in the art after reading the foregoing disclosures.

**Claims for the Contracting States: BE CH DE FR GB IT LI NL SE**

1. A dry mortar-forming composition which comprises, by weight, from about 24% to about 99% of hydraulic cement, from about 0% to 75% sand and from about 0.3 to about 4% of a water-retaining thickener, said dry composition being capable, when mixed with from about 25% to about 40% of its own weight in water, of producing a mortar which can be applied in thin layers for setting tile on walls and ceilings, characterized in that the water-retaining thickener is at least one modified hydroxyethyl cellulose having hydroxethyl M.S. from about 0.3 to about 4.0 and hydroxypropyl M.S. greater than 0.35.

2. The composition of claim 1 wherein the modified hydroxyethyl cellulose has a hydroxypropyl M.S. greater than 0.6.

3. The composition of claim 1 wherein the modified hydroxyethyl cellulose has a hydroxyethyl M.S. from about 0.8 to about 1.8 and a hydroxypropyl M.S. from about 0.8 to about 1.5.

4. The composition of claim 1 which further comprises about 1%, based by weight on the thickener, of a polymer selected from the group consisting of polyacrylamide and anionic or cationic copolymers of acrylamide.

5. The composition of claim 1 which further comprises from about 0.05% to about 2%, based by weight on the hydraulic cement, of a polyvinyl alcohol.

6. The composition of claim 2 which further comprises about 1%, based by weight on the thickener, of a polymer selected from the group consisting of polyacrylamide and anionic or cationic copolymers of acrylamide.

7. The composition of claim 2 which further comprises from about 0.05% to about 2%, based by weight on the hydraulic cement, of a polyvinyl alcohol.

8. The composition of claim 3 which further comprises about 1%, based by weight on the thickener, of a polymer selected from the group consisting of polyacrylamide and anionic or cationic copolymers of acrylamide.

9. The composition of claim 3 which further comprises·from about 0.05% to about 2%, based by weight on the hydraulic cement, of a polyvinyl alcohol.

**Claims for the Contracting State: AT**

1. A process of producing a mortar which can be applied in thin layers for setting tiles on walls and ceilings, wherein a dry composition, which comprises, by weight, from about 24% to about 99% of hydraulic cement, from about 0% to 75% sand and from about 0.3 to about 4% of a water-retaining thickener, is mixed with from about 25% to about 40% of its own weight of water, characterised in that the water-retaining thickener is at least one modified hydroxyethyl cellulose having hydroxyethyl M.S. from about 0.3 to about 4.0 and hydroxypropyl M.S. greater than 0.35.

2. The process of claim 1 wherein the modified hydroxyethyl cellulose has a hydroxypropyl M.S. greater than 0.6.

3. The process of claim 1 wherein the modified hydroxyethyl cellulose has a hydroxyethyl M.S. from about 0.8 to about 1.8 and a hydroxpropyl M.S. from about 0.8 to about 1.5.

4. The process of claim 1 in which the composition further comprises about 1%, based by weight on the thickener, of a polymer selected from the group consisting of polyacrylamide and anionic or cationic copolymers of acrylamide.

5. The process of claim 1 in which the composition further comprises from about 0.05% to about 2%, based by weight on the hydraulic cement, of a polyvinyl alcohol.

6. The process of claim 2 in which the composition further comprises about 1%, based by weight on the thickener, of a polymer selected from the group consisting of polyacrylamide and anionic or cationic copolymers of acrylamide.

7. The process of claim 2 in which the composition further comprises from about 0.05% to about 2%, based by weight on the hydraulic cement, of a polyvinyl alcohol.

8. The process of claim 3 in which the composition further comprises about 1%, based by weight on the thickener, of a polymer selected from the group consisting of polyacrylamide and anionic or cationic copolymers of acrylamide.

9. The process of claim 3 in which the composition further comprises from about 0.05% to about 2%, based by weight on the hydraulic cement, of a polyvinyl alcohol.

**Patentansprüche für die Vertragsstaaten: BE FR DE GB IT NL SE CH LI**

1. Zusammensetzung zur Bildung von Trockenmörtel, welche, bezogen auf Gewicht, von etwa 24% bis etwa 99% Wasserzement, von etwa 0% bis 75% Sand und von etwa 0,3 bis etwa 4% eines wasserbindenden Verdickers enthält, wobei diese Zusammensetzung, wenn sie mit Wasser mit von etwa 25% bis etwa 40% ihres eigenen Gewichts gemischt ist, geeignet ist, einen Mörtel zu bilden, der in dünnen

7

**0 115 955**

Schichten aufgebracht werden kann zur Verlegung von Fliesen an Wänden und Decken, dadurch gekennzeichnet, daß der wasserbindende Verdicker wenigstens eine modifizierte Hydroxyethylzellulose ist, welche ein Hydroxyethyl-M.S. von etwa 0,3 bis etwa 0,4 und ein Hydroxypropyl-M.S. größer als 0,35 aufweist.

2. Zusammensetzung nach Anspruch 1, bei welcher die modifizierte Hydroxyethylzellulose ein Hydroxypropyl-M.S. größer als 0,6 aufweist.

3. Zusammensetzung nach Anspruch 1, bei welcher die modifizierte Hydroxyethylzellulose ein Hydroxyethyl-M.S. von etwa 0,8 bis etwa 1,8 und ein Hydroxypropyl-M.S. von etwa 0,8 bis etwa 1,5 aufweist.

4. Zusammensetzung nach Anspruch 1, welche weiters etwa 1%, bezogen auf das Gewicht des Verdickers, eines Polymers enthält, das aus der aus Polyacrylamid und anionischen oder kationischen Copolymeren von Acrylamid bestehenden Gruppe ausgewählt ist.

5. Zusammensetzung nach Anspruch 1, welche weiters von etwa 0.05% bis etwa 2%, bezogen auf das Gewicht des Wasserzements, Polyvinylalkohol enthält.

6. Zusammensetzung nach Anspcuch 2, welche weiters 1%, bezogen auf das Gewicht des Verdickers, eines Polymers enthält, das aus der durch Polyacrylamid und anionischen oder kationischen Copolymeren gebildeten Gruppe ausgewählt ist.

7. Zusammensetzung nach Anspruch 2, welche weiters von etwa 0,05% bis etwa 2%, bezogen auf das Gewicht des Wasserzements, Polyvinylalkohol enthält.

8. Zusammensetzung nach Anspruch 3, welche weiters 1%, bezogen auf das Gewicht des Verdickers, eines Polymers enthält, das aus der durch Polyacrylamid und anionischen oder kationischen Copolymeren gebildeten Gruppe ausgewählt ist.

9. Zusammensetzung nach Anspruch 3, welche weiters von etwa 0,05% bis etwa 2% bezogen auf das Gewicht des Wasserzements, Polyvinylalkohol enthält.

**Patentansprüche fur den Vertragsstaat: AT**

1. Verfahren zur Herstellung eine Mörtels, der in dünner Schicht zur Verlegung von Fliesen an Wänden und Decken aufgebracht werden kann, wobei eine Trockenzusammensetzung, welche, bezogen auf Gewicht, von etwa 24% bis etwa 99% eines Wasserzements, von etwa 0% bis 75% Sand und von etwa 0,3 bis etwa 4% eines wasserbindenden Verdickers enthält, mit von etwa 25% bis etwa 40% ihres eigenen Gewichts gemischt wird, dadurch gekennzeichnet, daß der wasserbindende Verdicker wenigstens eine modifizierte Hydroxyethylzellulose ist, welche eine Hydroxylethyl-M.S. von etwa 0,3 bis etwa 0,4 und eine Hydroxypropy-M.S. größer als 0,35 aufweist.

2. Verfahren nach Anspruch 1, bei welchem die modifizierte Hydroxyethylzellulose ein Hydroxypropyl-M.S. größer als 0,6 aufweist.

3. Verfahren nach Anspruch 1, bei welchem die modifizierte Hydroxyethylcellulose ein Hydroxyethyl-M.S. von etwa 0,8 bis etwa 1,8 und ein Hydroxypropyl-M.S. von etwa 0,8 bis etwa 1,5 aufweist.

4. Verfahren nach Anspruch 1, welches weiters etwa 1%, bezogen auf das Gewicht des Verdickers, eines Polymers enthält, das aus der aus Polyacrylamid und anionischen oder kationischen Copolymeren von Acrylamid bestehenden Gruppe ausgewählt ist.

5. Verfahren nach Anspruch 1, welches weiters von etwa 0,05% bis etwa 2%, bezogen auf das Gewicht des Wasserzements, Polyvinylalkohol enthält.

6. Verfahren nach Anspruch 2, welches weiters 1%, bezogen auf das Gewicht des Verdickers, eines Polymers enthält, das aus der durch Polyacrylamid und anionischen oder kationischen Copolymeren gebildeten Gruppe ausgewählt ist.

7. Verfahren nach Anspruch 2, welches weiters von etwa 0,05% bis etwa 2%, bezogen auf das Gewicht des Wasserzements, Polyvinylalkohol enthält.

8. Verfahren nach Anspruch 3, welches weiters 1%, bezogen auf das Gewicht des Verdickers, eines Polymers enthält, das aus der durch Polyacrylamid und anioischen oder kationischen Copolymeren gebildeten Gruppe ausgewählt ist.

9. Verfahren nach Anspruch 3, welches weiters von etwa 0,05% bis etwa 2%, bezogen auf das Gewicht des Wasserzements, Polyvinylalkohol enthält.

**Revendications pour les Etats contractants: BE FR DE GB IT NL SE CH LI**

1. Composition formatrice de mortier sèche, comprenant en poids entre 24% et 99% environ de ciment hydraulique, entre 0% et 75% environ de sable et entre 0,3% et 4% environ d'un épaississant de rétention de l'humidité, composition sèche qui, mélangée avec 25% à 40% environ de son propre poids d'eau, est capable de donner un mortier qui peut être appliqué en couches minces pour fixer des carreaux sur des murs et des sols, caractérisée en ce que l'adjuvant de rétention de l'humidité est au moins une hydroxyéthylcellulose modifiée ayant un M.S. (nombre moyen de moles de groupements substituants combinés, par unité d'anhydroglucose cellulosique) d'hydroxyéthyle de l'ordre de 0,3 à 4,0 et un M.S. d'hydroxypropyle supérieur à 0,35.

8

2. Composition selon la revendication 1, dans laquelle l'hydroxyéthylcellulose modifiée a un M.S. d'hydroxypropyle supérieur à 0,6.

3. Composition selon la revendication 1, dans laquelle l'hydroxyéthylcellulose modifiée à une M.S. d'hydroxyéthyle compris entre 0,8 et 1,8 environ et un M.S. d'hydroxypropyle compris entre 0,8 et 1,5 environ.

4. Composition selon la revendication 1, comprenant en outre 1% en poids environ, sur la base de l'épaississant, d'un polymère choisi dans le groupe constitué par le polyacrylamide et des copolymères anioniques ou cationiques de l'acrylamide.

5. Composition selon la revendication 1, comprenant et outre de 0,05% à 2% environ, sur la base du poids du ciment hydraulique, d'un alcool polyvinylique.

6. Composition selon la revendication 2, comprenant en outre 1% environ, sur la base du poids de l'épaississant, d'un polymère choisi dans le groupe constitué par le polyacrylamide et des copolymères anioniques ou cationiques de l'acrylamide.

7. Composition selon la revendication 2, comprenant en outre de 0,05% à 2% environ, sur la base du poids du ciment hydraulique, d'un alcool polyvinylique.

8. Composition selon la revendication 3, comprenant en outre 1% environ, sur la base du poids de l'épaississant, d'un polymère choisi dans le groupe constitué par le polyacrylamide et des copolymères anioniques ou cationiques de l'acrylamide.

9. Composition selon la revendication 3, comprenant en outre de 0,05% à 2% environ, sur la base du poids du ciment hydraulique, d'un alcool polyvinylique.

**Revendications pour l'Etat contractant: AT**

1. Procédé de fabrication d'un mortier qui peut être appliqué en couches minces par la pose de carreaux sur les murs et les sols dans lequel on mélange une composition sèche comprenant en poids entre 24% et 99% environ de ciment hydraulique, entre 0% et 75% environ de sable et entre 0,3% et 4% environ d'un épaississant de rétention de l'humidité, avec 25% à 40% environ de son propre poids d'eau, caractérisé en ce que l'adjuvant de rétention de l'humidité est au moins une hydroxyéthylcellulose modifiée ayant un M.S. (nombre moyen de moles de groupements substituants combinés, par unité d'anhydroglucose cellulosique) d'hydroxyéthyle de l'ordre de 0,3 à 4,0 et un M.S. d'hydroxypropyle supérieur à 0,35.

2. Procédé selon la revendication 1, dans lequel l'hydroxyéthylcellulose modifiée a un M.S. d'hydroxypropyle supérieur à 0,6.

3. Procédé selon la revendication 1, dans lequel l'hydroxyéthylcellulose modifiée a un M.S. d'hydroxyéthyle compris entre 0,8 et 1,8 environ et un M.S. d'hydroxypropyle compris entre 0,8 et 1,5 environ.

4. Procédé selon la revendication 1 dans lequel la composition comprend en outre 1% en poids environ, sur la base de l'épaississant, d'un polymère choisi dans lè groupe constitué par le polyacrylamide et des copolymères anioniques ou cationiques de l'acrylamide.

5. Procédé selon la revendication 1, dans lequel la composition comprend en outre de 0,05% à 2% environ, sur la base du poids du ciment hydraulique, d'un alcool polyvinylique.

6. Procédé selon la revendication 2 dans lequel la composition comprend en outre 1% environ, sur la base du poids de l'épaississant, d'un polymère choisi dans le groupe constitué par le polyacrylamide et des copolymères anioniques ou cationiques de l'acrylamide.

7. Procédé selon la revendication 2, dans lequel la composition comprend en outre de 0,05% à 2% environ, sur la base du poids du ciment hydraulique, d'un alcool polyvinylique.

8. Procédé selon la revendication 3, dans lequel la composition comprend en outre 1% environ, sur la base du poids de l'épaississant, d'un polymère choisi dans le groupe constitué par le polyacrylamide et des copolymères anioniques ou cationiques de l'acrylamide.

9. Procédé selon la revendication 3, dans lequel la composition comprend en outre de 0,05% à 2% environ, sur la base du poids du ciment hydraulique, d'un alcool polyvinylique.